# FASCICULE DE BREVET EUROPEEN

(11) **EP 0 522 892 B1**
(45) Date de publication et mention de la délivrance du brevet: **05.03.1997**
(21) Numéro de dépôt: 92401469.9
(22) Date de dépôt: 27.05.1992
(51) Int. Cl.: A21D 13/08

(54) **Procédé et installation de fabrication d'un produit de pâtisserie et produits obtenus par ce procédé**
Verfahren und Anlage zur Herstellung von Backwaren sowie durch das Verfahren hergestellte Produkte
Process and installation for making a pastry product and products obtained thereby

(30) Priorité: 09.07.1991 FR 9108620
(43) Date de publication de la demande: 13.01.1993
(73) Titulaire: GRINGOIRE-BROSSARD S.A., F-45300 Pithiviers (FR)
(72) Inventeur: Rahier, Benoit, F-45300 Pithiviers (FR); Lucas, André, F-45300 Pithiviers (FR)
(74) Mandataire: Keib, Gérard

(56) Documents cités:
- EP-A- 0 061 545
- FR-A- 2 497 728
- FR-A- 2 497 729
- GB-A- 2 136 666
- US-A- 2 535 319
- US-A- 3 544 334

## Description

La présente invention concerne un procédé de fabrication d'un produit de pâtisserie hétérogène, constitué localement de matériaux de types différents donnant des parties de consistances et/ou de couleurs différentes.

L'invention concerne également une installation pour la mise en oeuvre de ce procédé.

L'invention concerne aussi le produit de pâtisserie obtenu selon ce procédé.

Le brevet US-A-3,544,334 décrit des pièces de pâte lisse congelée de plusieurs couleurs qui sont disposées dans un moule avant la cuisson, de façon à obtenir après cuisson un gâteau présentant des régions de couleurs différentes.

Le brevet US-A-2,535,319 décrit un procédé de préparation de gâteaux dans lequel des pièces décoratives identiques sont préparées par cuisson légère d'une pâte, sont découpées et disposées les unes à la suite des autres au-dessus d'une couche de pâte formant le fond du gâteau, puis sont noyées dans une couche de pâte.

L'invention a notamment pour but de proposer un procédé permettant de fabriquer un gâteau dont la tranche présente un dessin original formé de plusieurs figures colorées disposées dans un fond de couleur et/ou de consistance différente de celles desdites figures.

A cet effet, conformément à l'invention, le procédé consiste à réaliser en continu lesdites figures du dessin au moyen de profilés obtenus à partir d'un ou plusieurs matériaux de pâtisserie tels que pâte à gâteau, à associer en continu ces profilés à un matériau de pâtisserie de couleur et/ou de consistance différentes de celle des matériaux de pâtisserie précédemment évoquées, afin de constituer le fond du dessin et à cuire ces matériaux ainsi assemblés.

Les profilés peuvent être découpés à la longueur voulue avant d'être associés au matériau destiné à constituer le fond du dessin.

Les profilés peuvent présenter une forme tubulaire dont la paroi est constituée d'une pâte à gâteau d'un premier type,et dont l'évidement central est rempli d'une pâte à gâteau d'un autre type ou d'un matériau de type fourrage tel qu'un fourrage à base de matière grasse et/ou à base de chocolat et/ou à base de fruits.

Ainsi, par un choix judicieux de la forme de la section droite des profilés, et par un agencement convenable de ces profilés les uns par rapport aux autres dans le matériau formant le fond du dessin, on obtient un gâteau qui, après cuisson, présente dans sa section droite un dessin augmentant l'agrément du produit notamment auprès de la clientèle enfantine.

Selon un mode particulier de mise en oeuvre du procédé de l'invention, on dépose d'abord de la pâte à gâteau sous la forme d'une première couche dans un moule, puis on dépose sur cette couche un ou plusieurs profilés, on dépose sur ces derniers une seconde couche de ladite pâte à gâteau et on soumet le tout à la cuisson.

D'autres avantages et caractéristiques de l'invention ressortiront à la lecture de la description qui va suivre de plusieurs modes de réalisation de l'invention, description faite en référence aux dessins annexés sur lesquels :
- La figure 1 est une vue schématique en élévation d'une installation pour la mise en oeuvre du procédé selon un second mode de réalisation de l'invention.
- La figure 1(a) est une section selon le plan A-A de la figure 1;
- La figure 2 montre plus particulièrement un dispositif d'extrusion permettant d'obtenir un "tube" à deux matériaux; et

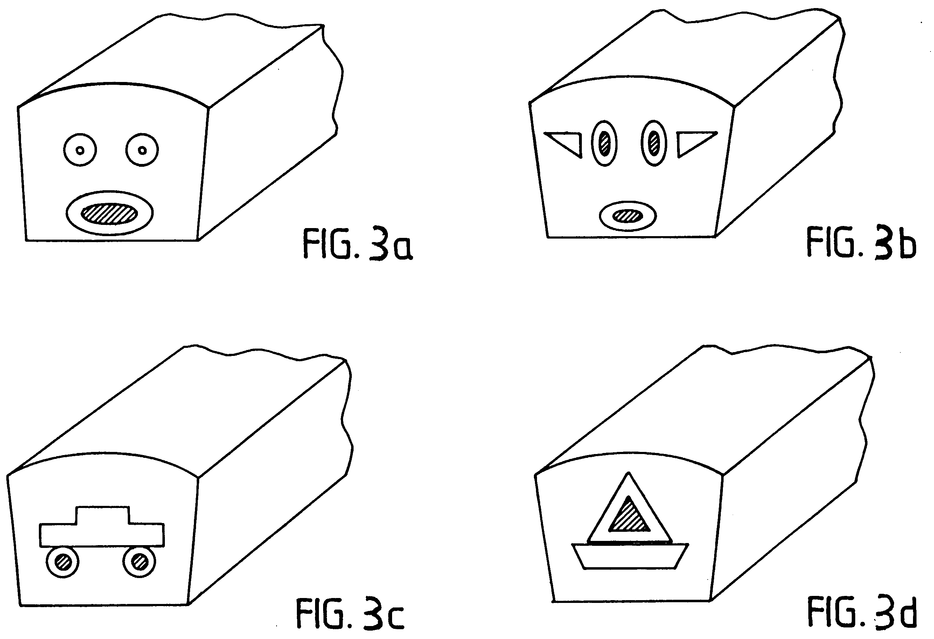

- Les figures 3(a) à 3(d) représentent quatre exemples de dessin de tranche de gâteau selon un mode de réalisation de l'invention.

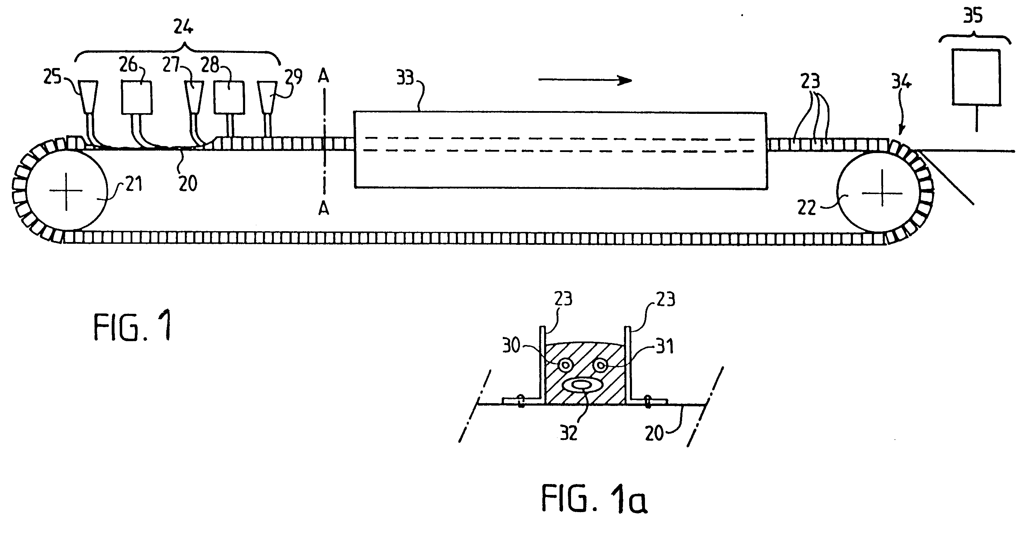

La figure 1 montre un exemple de réalisation d'une installation de fabrication en continu de produit de pâtisserie selon l'invention.

Cette installation comporte une bande sans fin 20 réalisée par exemple en maillons d'acier articulés, montée tendue entre un rouleau d'entraînement 21 et un rouleau de renvoi 22.

Sur la bande 20 sont montés des éléments formant bordure latérale de moule 23, tels que représentés sur la figure 1(a).

A l'extrémité amont du brin supérieur de la bande sans fin 20 se trouve un poste d'alimentation 24 composé, d'amont en aval, d'un premier distributeur de pâte de fond 25, d'un premier dispositif d'extrusion 26, d'un deuxième distributeur de pâte de fond 27, d'un deuxième dispositif d'extrusion 28 et d'un troisième distributeur de pâte de fond 29.

Ainsi, les dispositifs d'extrusion 26 et 28 déposent en continu sur le moule sans fin formé par la bande 20 et les éléments de bordure 23, entre deux couches de pâte de fond déposées par les distributeurs 25, 27 et 29, un ou deux profilés tels que les profilés 30, 31 et 32 dont on peut voir la section droite sur la figure 1a.

En aval du poste d'alimentation 24 se trouve un four tunnel de cuisson 33 dans lequel les produits provenant du poste 24 sont convenablement cuits.

En aval du four tunnel 33, se trouve un poste de démoulage 34 qui comprend essentiellement une lame raclant le fond du moule sans fin et guidant le gâteau cuit vers un poste de tronçonnage 35 conçu pour découper le gâteau après cuisson, en éléments de longueur convenable.

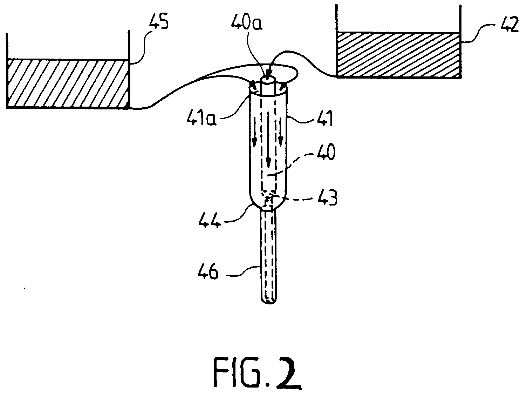

La figure 2 représente un dispositif d'extrusion permettant de fabriquer un profilé cylindrique à deux matériaux, tels que les profilés 30 à 32 de la figure 1a.

Ce dispositif comporte un tube intérieur 40 entouré par un tube extérieur 41.

Le tube intérieur 40 présente une entrée 40a qui est reliée à un réservoir de pâte ou de fourrage intérieur 42, et une sortie ou filière intérieure 43 de section convenable.

Le tube extérieur 41 se prolonge au-delà de la filière intérieure 43 par une extrémité formant filière de section convenable 44.

Le tube 41 comporte une entrée 41a reliée à un réservoir de pâte extérieure 45.

On comprend que lorsque l'on alimente l'entrée 40a du tube intérieur 40 en pâte ou fourrage intérieur sous pression, et l'entrée 41a du tube extérieur 41 en pâte extérieure sous pression, on obtient à la sortie de la filière 44 un cylindre profilé 46 formé en son centre de pâte ou fourrage intérieur et sur sa périphérie de pâte extérieure.

Selon un exemple de mise en oeuvre de l'invention, on fabrique un gâteau de la manière suivante : les profilés 30 à 32 de la figure 1a sont réalisés au moyen de dispositifs d'extrusion tels que celui de la figure 2, alimentés de la façon suivante : la pâte extérieure est une pâte dure, par exemple une pâte sablée vanillée. Par les termes "pâte dure" on entend toute pâte à gâteau ayant une viscosité suffisante pour contenir la pression interne de la pâte ou du fourrage intérieur lors des manipulations du profilé et lors de la cuisson du gâteau. Le fourrage intérieur est un fourrage gras chocolaté résistant à la cuisson. L'extrusion est faite à température ambiante.

Le fond est constitué d'une pâte de type cake chocolaté que l'on dépose à l'aide des distributeurs 25, 27 et 29 de la figure 1.

Bien entendu, la présente invention ne se limite pas aux exemples décrits ci-dessus. Elle englobe au contraire toutes les variantes restant dans le cadre de la définition donnée par les revendications annexées.

## Revendications

1. Procédé de fabrication d'un produit de pâtisserie hétérogène constitué localement de matériaux de types différents donnant des parties de consistance et/ou de couleur différente, la tranche dudit produit présentant un dessin original formé de plusieurs figures colorées disposées dans un fond de couleur et/ou de consistance différente, caractérisé en ce que l'on réalise en continu chaque figure du dessin au moyen d'un profile (30, 31, 32) obtenu séparément à partir d'au moins un matériau de pâtisserie, en ce que l'on associe en continu ce ou ces profilé(s) (30, 31, 32) à un matériau de pâtisserie de couleur et/ou de consistance différente constituant le fond du dessin et en ce que l'on cuit lesdits matériaux ainsi assemblés.

2. Procédé selon la revendication 1, caractérisé en ce que certains au moins des profilés (46) sont de forme tubulaire dont l'évidement central est rempli d'un matériau de type fourrage et dont la paroi extérieure est réalisée en un matériau de type pâte.

3. Procédé selon la revendication 1 ou 2, caractérisé en ce que ladite paroi extérieure est constituée de pâte dure.

4. Installation pour la mise en oeuvre du procédé selon l'une des revendications 1 à 3, caractérisée en ce qu'elle comporte une bande sans fin (20) comportant des éléments formant bordure latérale de moule (23), dont la trajectoire passe successivement par un poste d'alimentation (24) composé d'un premier distributeur de pâte de fond (25), d'un premier dispositif d'extrusion (26), d'un deuxième distributeur de pâte de fond (27), d'un deuxième dispositif d'extrusion (28) et d'un troisième distributeur de pâte de fond (29), un four de cuisson (33), un poste de démoulage (34) et un poste de tronçonnage (35).

## Claims

1. Process for making a heterogeneous pastry product consisting locally of substances of different types, yielding parts of different consistency and/or colour, a slice of the said product exhibiting an original design formed from several coloured figures arranged against a background of different colour and/or consistency; characterized in that each figure of the design is continuously prepared by means of a profiled component (30, 31, 32) obtained separately from at least one pastry substance; in that this profiled component or these profiled components (30, 31, 32) are continuously combined with a pastry substance of different colour and/or consistency constituting the background of the design;and in that the said substances thus assembled are baked.

2. Process according to Claim 1, characterized in that at least some of the profiled components (46) have a tubular shape, the central opening of which is filled with a substance of the filling type and the outer wall of which is made from a substance of the paste type.

3. Process according to Claim 1 or 2, characterized in that the said outer wall is composed of hard paste.

4. Installation for implementing the process according to one of Claims 1 to 3, characterized in that it includes an endless belt (20) which includes elements forming the lateral edge of a mould (23), the path of which passes in succession via a supply station (24) made up of a first background-paste dispenser (25), of a first extrusion device (26), of a second background-paste dispenser (27), of a second extrusion device (28) and of a third background-paste dispenser (29), a baking oven (33), a demoulding station (34) and a cutting station (35).

## Patentansprüche

1. Verfahren zur Herstellung von heterogenen Backwaren, die stellenweise aus Materialien von unterschiedlichen Typen gebildet sind, die den Teilen eine unterschiedliche Konsistenz und/oder Farbe geben, wobei die abgeschnittene Scheibe dieses Produkts eine eigentümliche Gestaltung darstellt, die aus mehreren colorierten Figuren gebildet ist, die in einem Untergrund von unterschiedlicher Farbe und/oder Konsistenz angeordnet sind, dadurch gekennzeichnet, daß man jede Figur der Gestaltung mit Hilfe eines Profils (30, 31, 32), das man getrennt erhält ausgehend von mindestens einem Material der Backwaren, kontinuierlich herstellt, daß man kontinuierlich dieses oder diese Profile (30, 31, 32) mit einem Material der Backwaren mit unterschiedlicher Farbe und/oder Konsistenz verbindet, das den Untergrund der Gestaltung bildet, und daß man die so zusammengesetzten Materialien backt.

2. Verfahren nach Anspruch 1, dadurch gekennzeichnet, daß einige zumindest der Profile (46) röhrenförmig sind, deren zentrale Höhlung ausgefüllt ist mit einem Material des Nahrungsmitteltyps und dessen äußere Wand realisiert ist durch ein Material des Teigtyps.

3. Verfahren nach Anspruch 1 oder 2, dadurch gekennzeichnet, daß diese äußere Wand gebildet ist durch einen harten Teig.

4. Einrichtung zur Durchführung des Verfahrens nach einem der Ansprüche 1 bis 3, dadurch gekennzeichnet, daß sie ein Endlosband (20) aufweist, das Elemente aufweist, die seitliche Ränder (23) einer Form bilden, dessen Umlaufbahn aufeinanderfolgen durch eine Versorgungsstation (24), die zusammengesetzt ist aus einem ersten Verteiler (25) des Untergrundteigs, einer ersten Extrusionseinrichtung (26), einem zweiten Verteiler (27) für Untergrundteig, einer zweiten Extrusionseinrichtung (28) und einem dritten Verteiler (29) für Untergrundteig, einem Backofen (33), einer Entformungsstation (34) und einer Schneidstation (35) verläuft.
